# EUROPEAN PATENT APPLICATION

(11) **EP 2 075 540 A2**
(43) Date of publication of application: **01.07.2009**
(21) Application number: 08169490.3
(22) Date of filing: 20.11.2008
(51) Int. Cl.: G01C 21/34

(54) **Navigation apparatus and navigation program**

(30) Priority: 25.12.2007 JP 2007332480
(71) Applicant: Aisin AW Co., Ltd., Fujii-cho Anjo-shi, Aichi 444-1192 (JP)
(72) Inventor: Kawauchi, Hiroshi, Okazaki-shi Aichi 444-8564 (JP)
(74) Representative: TBK-Patent

(57) **Abstract**

A navigation apparatus referring to map information when a destination is input, performing a guidance according to a guidance route to the set destination, and displaying candidate site information on one or two or more candidate sites capable of stopping by after deviating from the guidance route includes: a deviation point determining unit determining a deviation point of which a route to arrive at the candidate site is a point deviating from the guidance route; a deviation information obtaining unit obtaining deviation information indicating an extent of deviation from the deviation point to the candidate site; and a display unit displaying the deviation information on the candidate site related to the candidate site information.

## Description

### INCORPORATION BY REFERENCE

The disclosure of Japanese Patent Application No. 2007-332480 filed on December 25, 2007 including the specification, drawings and abstract is incorporated herein by reference in its entirety.

### BACKGROUND OF THE INVENTION

### 1. Field of the Invention

The present invention relates to a navigation apparatus and a navigation program referring to map information when a destination is input, performing a guidance according to a guidance route to the set destination, and displaying candidate site information on one or two or more candidate sites capable of stopping by after deviating from the guidance route.

### 2. Description of the Related Art

There is a navigation apparatus which has following functions: accepting an input of a destination by a user; guiding the user to the destination by displaying a guidance route to the input destination; accepting an input of a search target category by the user; searching a facility that belongs to the designated category and is located along the guidance route; and displaying the search result. These functions are used significantly in such a case when the user wants to stop by at facilities such as a restaurant, a convenience store, and so on, and a sightseeing spot and the like, for example, where are located in a vicinity of the guidance route for the purpose of, for example shopping, having a meal or sightseeing, and the like (hereinafter, these are called as a target facility and the like).

Here, when a target facility and the like, which belongs to a designated category and is located along a guidance route, are searched and the result thereof is displayed, in order to provide information to determine which target facility and the like to stop by to the user, displaying various information putting together has been performed conventionally. For example, in Japanese Patent Application Publication No. JP-A-H9-264750, a navigation apparatus displaying information on a linear distance from a vehicle position to a searched target facility and the like, and a shortest distance from a guidance route to a target facility and the like is described. And also, in Japanese Patent Application Publication No. JP-A-2006-266757, a navigation apparatus displaying information on a route distance (a road distance) from a vehicle position to a searched target facility and the like, and a shortest distance from a guidance route to a target facility and the like is described.

### SUMMARY OF THE INVENTION

When a user wants to stop by at a target facility and the like located along a guidance route, it is preferable to minimize a deviation from the guidance route in the cases such as giving a priority to arrive at a set final destination early, and giving a priority to ease of access to a target facility and the like for stopping by while traveling in a region where the user is unfamiliar with its geography. Therefore, when a navigation apparatus displays a search result of a target facility and the like in a vicinity of a vehicle position, it is preferable that a navigation apparatus is structured to be able to notify the user of information on such an extent of deviation.

Regarding the case, the navigation apparatus described in Japanese Patent Application Publication No. JP-A-H9-264750 displays information on a distance from a vehicle position to a searched target facility and the like, and the navigation apparatus described in Japanese Patent Application Publication No. JP-A-2006-266757 displays information on a route distance (an actual moving distance) from a vehicle position to a searched facility and the like. These pieces of information are on a distance (a linear distance or a route distance) based on a vehicle position, however, these navigation apparatuses do not provide any information on a deviation from the guidance route. Consequently, there is room for improvement.

Further, in the navigation apparatuses described in Japanese Patent Application Publication No. JP-A-H9-264750 and Japanese Patent Application Publication No. JP-A-2006-266757, information on a linear distance from a guidance route to a target facility and the like is displayed. However, in this case, although the vehicle actually deviates from the guidance route at a predetermined intersection, and then travels along a road, a linear distance from the guidance route to a target facility and the like is only obtained regardless of the deviation point and a road to the target facility and the like. Therefore, in the case that a road from a deviation point on a guidance route to a target facility and the like is bypassed significantly and complicated, for example, a distance that the vehicle actually travels after deviating from the guidance route comes to be long even though a linear distance from the guidance route to the target facility and the like is short. Consequently, there is a case incapable of notifying an extent of deviation from a guidance route precisely only by displaying a linear distance from the guidance route to a target facility and the like. There is also room for improvement regarding the case.

The present invention is made in view of solving the above-described problems, and an object thereof is to provide a navigation apparatus and a navigation program that the user can appropriately select a target facility and the like meeting his/her desire by appropriately displaying information on an extent of deviation from the guidance route when information on the target facility and the like located along the guidance route is displayed.

In order to attain the above-described object, according to the present invention, the navigation apparatus referring to map information when a destination is input, performing a guidance according to a guidance route to the set destination, and displaying candidate site information on one or two or more candidate sites capable of stopping by after deviating from the guidance route is characteristically structured such that a deviation point determining unit determining a deviation point of which a route to arrive at the candidate site is a point deviating from the guidance route, a deviation information obtaining unit obtaining deviation information indicating an extent of deviation from the deviation point to the candidate site, and a display unit displaying the deviation information on the candidate site related to the candidate site information are provided.

According to the characteristic structure, the navigation apparatus determines a deviation point of which a route to arrive at each candidate site is a point deviating from a guidance route regarding one or two or more candidate sites capable of stopping by after deviating from the guidance route based on a connection relation of roads included in map information. And then, it obtains deviation information indicating an extent of deviation from the deviation point to the candidate site, and displays the deviation information on the candidate site related to information on the candidate site on the display unit. Since the deviation information indicates the extent of deviation to the candidate site based on the deviation point to the candidate site while traveling the guidance route to the destination, it makes it possible to notify the user of the extent of deviation from the guidance route depending on the route that the vehicle is supposed to travel actually when it stops by at the candidate site. Consequently, it allows the user to select a target facility and the like meeting his/her desire appropriately.

Here, it is preferable that the deviation information includes information on a road distance from the deviation point to the candidate site.

According to this structure, the deviation information includes information on a road distance from a deviation point to a candidate site. The road distance is equivalent to the distance that the vehicle actually travels from a deviation point to a candidate site, which makes the deviation information to notify the user more appropriate. Therefore, the user is allowed to select a target facility and the like meeting his/her desire appropriately.

Further, it is preferable that the deviation information includes information on a road distance from the deviation point to a return point returning to the guidance route after traveling through the candidate site.

There is a case that is able to easily return to a guidance route near a final destination after traveling through a candidate site depending on a position of the candidate site with respect to the guidance route, even though a road distance from a deviation point is somewhat long. According to this structure, the deviation information includes information on a road distance to a return point returning to a guidance route after traveling through a candidate site from a deviation point. Therefore, it is possible to appropriately notify the user of an extent of deviation from a guidance route taking into consideration not only the vehicle arriving at a candidate site, but also returning to the guidance route, or arriving at a destination in stopping by at the candidate site, therefore, which makes the deviation information to notify the user appropriate in a comprehensive manner.

It is preferable that the deviation information includes information on the number of guidance while traveling from the deviation point to the candidate site.

Depending on a state of a road system from a deviation point to a candidate site, there are cases in which it is required to repeat right/left-turns frequently because roads are complicated although a road distance from a deviation point is not so long, or conversely, it is able to arrive at a candidate site directly without right/left-turns although a road distance from a deviation point is somewhat long. According to this structure, the deviation information includes information on the number of guidance while traveling from a deviation point to a candidate site, thereby, for example, in the case when the user wants to give a priority to ease of access to a candidate site while traveling in a region where the user is unfamiliar with its geography such as a travel destination and the like, it is possible to provide information meeting the user's desire more appropriately.

It is preferable to provide a separation information obtaining unit obtaining separation information indicating a linear distance or a road distance from a vehicle position to the candidate site regarding the candidate site. And it is also preferable that the display unit displays the separation information related to the candidate site information together with the deviation information.

According to this structure, the navigation apparatus obtains separation information from a vehicle position to a candidate site in the separation information obtaining unit. The separation information is displayed on the display unit together with the deviation information as has been explained, thereby, the user is allowed to appropriately select a target facility and the like meeting his/her desire considering a relation with a vehicle position, and an extent of deviation from a guidance route.

It is preferable that the display unit list-displays the candidate site information in ascending order of an extent of deviation from the deviation point to the candidate site based on the deviation information.

According to this structure, the candidate site information is list-displayed on the display unit in ascending order of an extent of deviation from a deviation point to a candidate site. Therefore, in the case when the user wants to give a priority to an extent of deviation from a guidance route, it makes the user possible to select a target facility and the like meeting his/her desire easily.

It is also preferable that the display unit list-displays the candidate site information in ascending order of a linear distance or a road distance from the vehicle position to the candidate site based on the separation information.

According to this structure, the candidate site information is list-displayed on the display unit in ascending order of a linear distance or a road distance form a vehicle position to a candidate site. Therefore, in the case when the user wants to give a priority to a distance from a vehicle position, it makes the user possible to select a target facility and the like meeting his/her desire easily.

Here, it is preferable to provide a selecting unit selecting one from among a plurality of orders selected from the followings as an order in which the display unit list-displays the candidate site information,
(A) an order of a road distance from the deviation point to the candidate site;
(B) an order of a road distance from the deviation point to a return point;
(C) an order of the number of guidance while traveling from the deviation point to the candidate site;
(D) an order of a linear distance from a vehicle position to the candidate site;
(E) an order of a road distance from the vehicle position to the candidate site. It is also preferable that the display unit list-displays the candidate site information according to the order selected by the selecting unit.

According to this structure, the candidate site information is list-displayed on the display unit according to an extent of deviation from a deviation point to a candidate site, or one among a plurality of orders indicating a distance from a vehicle position selected by the selecting unit. Therefore, the user is allowed to easily select a target facility and the like meeting his/her desire changing a priority order depending on circumstances occasionally.

The characteristic structure of the navigation program referring to map information when a destination is input, performing a guidance according to a guidance route to the set destination, and displaying candidate site information on one or two or more candidate sites capable of stopping by after deviating from the guidance route according to the present invention is to cause a computer to execute a deviation point determining step determining a deviation point of which a route to arrive at the candidate site is a point deviating from the guidance route, a deviation information obtaining step obtaining deviation information indicating an extent of deviation from the deviation point to the candidate site, and a display step displaying the deviation information on the candidate site related to the candidate site information.

According to the characteristic structure, the computer operating in accordance with the navigation program determines a deviation point of which a route to arrive at each candidate site is a point deviating from a guidance route regarding one or two or more candidate sites capable of stopping by after deviating from the guidance route based on a connection relation of roads included in map information. And then, it obtains deviation information indicating an extent of deviation from the deviation point to the candidate site, and displays the deviation information on each candidate site related to information on the candidate site. Since the deviation information indicates the extent of deviation to the candidate site based on the deviation point to the candidate site while traveling the guidance route to the destination, it makes it possible to notify the user of the extent of deviation from the guidance route depending on the route that the vehicle is supposed to travel actually when it stops by at the candidate site. Consequently, it allows the user to select a target facility and the like meeting his/her desire appropriately.

### BRIEF DESCRIPTION OF THE DRAWINGS

FIG. 1 is a block diagram showing a schematic structure of a navigation apparatus according to a first embodiment;
FIG. 2 is a view showing an example of a structure of map information stored in a map database;
FIG. 3 is a view showing an example of link information stored in the map database;
FIG. 4 is a view showing an example of facility information stored in the map database;
FIG. 5 is an explanatory view for extracting a candidate site;
FIG. 6 is an explanatory view for determining a deviation point;
FIG. 7 is a view showing an example of a display displayed on a display input device according to the first embodiment;
FIG. 8 is a flowchart showing processing procedures of a deviation information display processing according to the first embodiment;
FIG. 9 is a block diagram showing a schematic structure of a navigation apparatus according to a second embodiment;
FIG. 10 is an explanatory view for determining a return point;
FIG. 11 is a view showing an example of a display displayed on a display input device according to the second embodiment; and
FIG. 12 is a flowchart showing processing procedures of a deviation information display processing according to the second embodiment.

### DETAILED DESCRIPTION OF THE PREFERRED EMBODIMENTS

### [First embodiment]

A first embodiment of the present invention is explained based on drawings.

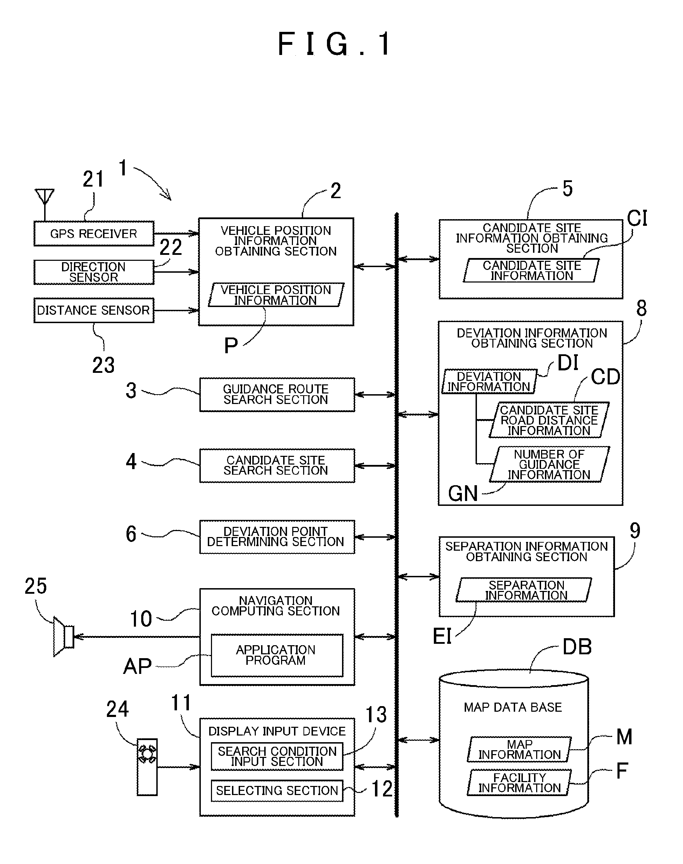

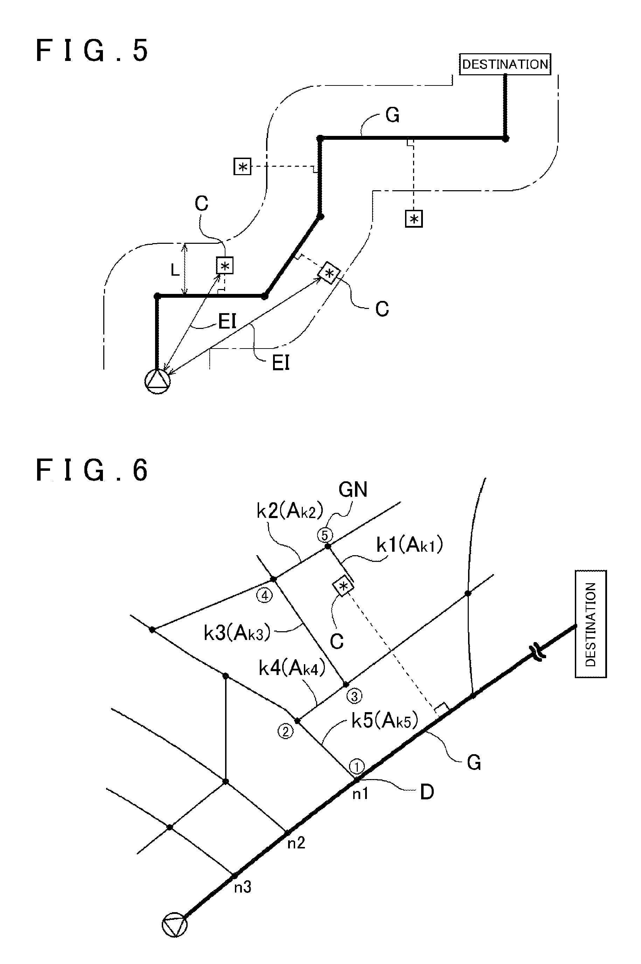

FIG. 1 is a block diagram showing a schematic structure of a navigation apparatus 1 according to the present invention. When a destination is set, the navigation apparatus 1 refers to map information M, and performs a route guidance to the destination, and displays candidate site information CI on one or two or more candidate sites C (see FIG. 5) capable of stopping by after deviating from a guidance route G (see FIG. 5). At this time, a deviation point D (see FIG. 6) deviating from the guidance route G in order to arrive at the candidate site C is determined, and deviation information DI indicating an extent of deviation to the candidate site C based on the deviation point D is obtained, and then the deviation information DI on each candidate site C is displayed on a display unit related to information on the candidate site C. This structure makes it possible for a user to select a target facility and the like meeting his/her desire appropriately.

Respective functional parts of the navigation apparatus 1 shown in FIG. 1, concretely, a vehicle position information obtaining section 2, a guidance route search section 3, a candidate site search section 4, a candidate site information obtaining section 5, a deviation point determining section 6, a deviation information obtaining section 8, a separation information obtaining section 9, and a navigation computing section 10 are configured with a computing processing unit such as a CPU acting as a core member. The functional parts for performing various processes for input data, is mounted in either hardware or software (a program) or both of them. These respective functional parts are configured to transmit/receive information mutually. A display input device 11 performing in accordance with an application program AP is connected to the navigation computing section 10. A map database DB to which the navigation apparatus 1 refers, is stored in a recording medium such as, for example, a hard disc, a DVD-ROM, a CD-ROM and so on, and a drive unit for driving these is included as a hardware configuration. Hereinafter, a configuration of each section of the navigation apparatus 1 according to this embodiment will be explained in detail.

### 1. Map database

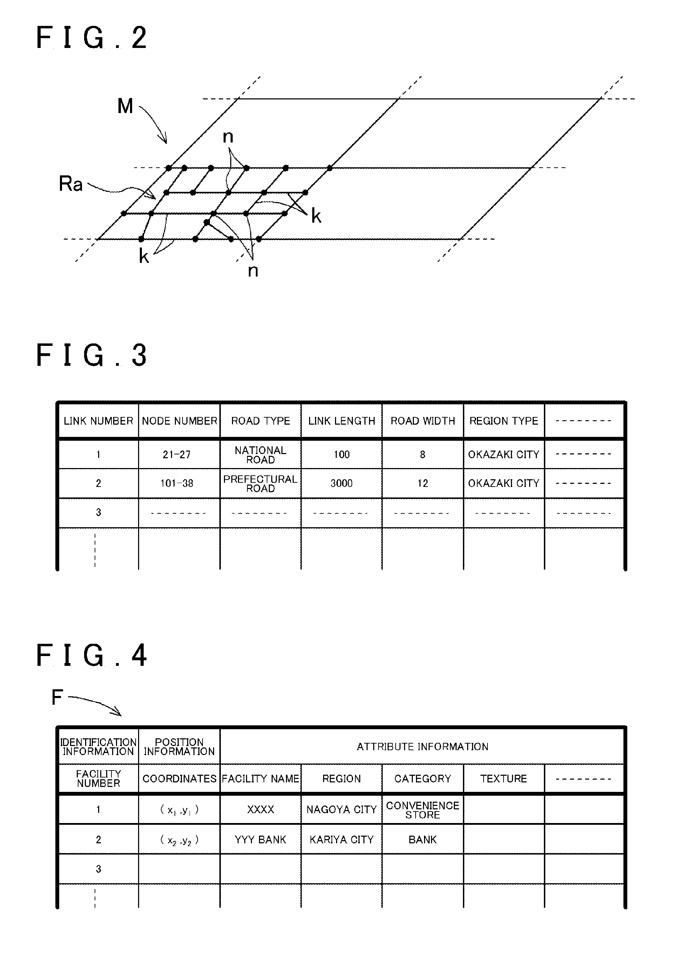

The map database DB stores the map information M which is divided into predetermined divisions, and a plurality of pieces of facility information F related to the map information M. FIG. 2 is a view showing an example of the structure of the map information M stored in the map database DB. As shown in the drawing, the map information M has road information Ra expressing a road network with a connection relation between a large number of nodes n corresponding to intersections and links k corresponding to roads linking with each intersection. Note that, in FIG. 2, the road information Ra on only one division is shown, and the road information Ra on other divisions is abbreviated. Each node n has identification information (node number) and information on the position (coordinates) on the map expressed with latitude and longitude to be distinguished from other nodes n. FIG. 3 is a view showing one example of the structure of link information. Each link k, as shown in FIG. 3, is specified as the one that is connected via one or two or more nodes n, and has information on such as shape interpolation points to express a road type (types of an express way, a toll road, a national road, a prefectural road, and so on), a link length, a road width, a region type, and a link shape as its attribute information.

FIG. 4 is a view showing an example of the structure of the facility information F stored in the map database DB. As shown in the drawing, the facility information F has as the contents, identification information (facility number) to distinguish one facility from other facilities, position information and attribute information of each facility. Here, the position information is information of the position (coordinates) on the map expressed with latitude and longitude of a representative point of each facility. The representative point of each facility, for example, is set at a central position of a length direction and a width direction of each facility. The attribute information expresses an attribute of each facility including, for example, a facility name, a region name where the facility is located, a category name that the facility belongs to, and so on.

### 2. Vehicle position information obtaining section

The vehicle position information obtaining section 2 functions as the vehicle position information obtaining unit obtaining vehicle position information P indicating a current position of the vehicle. Here, the vehicle position information obtaining section 2 is connected to a GPS receiver 21, a direction sensor 22, and a distance sensor 23. Here, the GPS receiver 21 receives a GPS signal from a global positioning system (GPS) satellite. The GPS signal is normally received every one second, and output to the vehicle position information obtaining section 2. The vehicle position information obtaining section 2 analyses the signal received in the GPS receiver 21 from the GPS satellite, thereby capable of obtaining information on a current position (latitude and longitude), a travel direction, a moving speed, and so on of the vehicle. The direction sensor 22 detects a travel direction of the vehicle and a change in the travel direction. The direction sensor 22 is formed with, for example, a gyro sensor, a geomagnetic sensor, an optical rotation sensor and a rotating-type resistance volume attached to a rotating portion of a steering wheel, an angle sensor attached to a wheel portion, and so on. And then the direction sensor 22 outputs the detection result to the vehicle position information obtaining section 2. The distance sensor 23 detects a vehicle speed and a moving distance of the vehicle. The distance sensor 23 is formed with, for example, a vehicle speed pulse sensor outputting a pulse signal every time a drive shaft, a wheel, and the like of the vehicle rotates a certain amount, a yaw/G sensor detecting acceleration of the vehicle, a circuit integrating the detected acceleration, and so on. And then, the distance sensor 23 outputs information on the vehicle speed and the moving distance as the detection result to the vehicle position information obtaining section 2.

The vehicle position information obtaining section 2 performs a calculation to locate the vehicle by using a publicly known method based on the outputs from the GPS receiver 21, the direction sensor 22, and the distance sensor 23. Further, the vehicle position information obtaining section 2 obtains the road information Ra of the vicinity of the vehicle position extracted from the map database DB, and also performs a correction for overlaying the vehicle position on the road shown in the road information Ra by performing a publicly known map matching based on the road information Ra. In this manner, the vehicle position information obtaining section 2 obtains the vehicle position information P including information on a current position of the vehicle expressed with latitude and longitude, and information on the travel direction of the vehicle.

### 3. Guidance route search section

The guidance route search section 3 functions as a guidance route search unit referring to information stored in the map database DB, and searching a route to a set destination. When the user sets a destination, the guidance route search section 3 performs a process of searching and determining the guidance route G from a starting point to the destination. Here, the starting point is determined based on the vehicle position information P obtained in the vehicle position information obtaining section 2, however, it can be also determined by the user inputting using the display input device 11 or a remote control input device 24. Further, when the user selects the candidate site C to stop by, the guidance route search section 3 performs a process of searching and determining a route to the destination after traveling through the candidate site C.

The process that the guidance route G is searched and determined in the guidance route search section 3 can be performed by publicly known various methods, for example the following method.

The method is based on a link length of each link k that structures the guidance route G. For example, when a starting point and a destination are determined, a plurality of candidate routes G1, G2, G3, ..., whose both points are linked are given. The respective candidate routes G1, G2, G3 ...are recognized as an aggregate of the connecting links k that structure the candidate route. Regarding the respective links k, as already explained, information on the link length is stored in the map database DB. The guidance route search section 3 refers to the map database DB, and obtains information on the link length of the link k that structures the candidate routes G1, G2, G3, ..., thereby it makes it possible to calculate a total of the link length of the whole route to all the candidate routes G1, G2, G3, ..., namely, the road distance to the destination. For example, the total of the link length of the whole route is regarded as a cost required to pass through the route. Therefore, the route candidate whose cost is the lowest is determined as the guidance route G.

In the explanation as above, the link length has been explained as an element to determine the cost in order to simplify the explanation. However, as conventionally known, a travel time in each link k, a road type (types of an express way, a toll road, a national road, a prefectural road, and so on) and a road width included in link information on each link k, when the node n linking between the links k is an intersection, time to pass through the intersection, further, a distance to the link k or the node n from a starting point, a right/left-turn, the number of road lanes, and so on can be included in a cost calculation.

### 4. Candidate site search section

The candidate site search section 4 functions as a candidate site search unit searching the candidate site C meeting the condition input externally. When the output from the display input device 11 is accepted as will be described later, the candidate site search section 4 refers to the map database DB, and searches the candidate site C that is located in the vicinity of the guidance route G in an interval between the vehicle position and a destination, and satisfies the condition that the user desires. In searching the candidate site C, attribute information on each facility in the facility information F included in the map database DB is referred to. In this example, an example of which the candidate site C is searched based on the category that the facility belongs to is explained as one example.

For, example, suppose that the user wants to stop by at a restaurant for having a meal while traveling on the guidance route G toward a destination. In this case, the user selects the category of "Restaurant" in setting a search condition of a peripheral facility search. And then, the candidate site search section 4 in the navigation apparatus 1 extracts facilities including "Restaurant" in the attribute information from a plurality of facilities stored in the map database DB. Further, a linear distance from each extracted facility to the guidance route G is obtained. As shown in FIG. 5, the linear distance can be obtained from a length of a perpendicular extending from the representative point of each facility to the nearest link k among the respective links k that structure the guidance route G. Concretely, it is obtained by a calculation based on the coordinates of the representative point of each facility and the coordinates of the foot of the perpendicular extending from the representative point of the facility to the nearest link k. And then, a facility of which the obtained linear distance in this manner is shorter than a predetermined distance L set beforehand is further extracted, thereby one or two or more candidate sites C are determined. The one or the two or more candidate sites C determined in this manner are located capable of stopping by after deviating from the guidance route G.

### 5. Candidate site information obtaining section

The candidate site information obtaining section 5 functions as a candidate site information obtaining unit obtaining candidate site information CI on the one or the two or more candidate sites C determined after extracted in the candidate site search section 4. The candidate site information CI includes attribute information expressing the attribute except the category name of each facility, for example, a facility name, and information including the region name where the facility is located, and the like. Also, the candidate site information CI may include image information of an icon display corresponding to the category that the facility belongs to, and the like.

### 6. Deviation point determining section

The deviation point determining section 6 functions as a deviation point determining unit determining the deviation point D, being a point deviating from the guidance route G in order to arrive at each candidate site C.
In this embodiment, the deviation point determining section 6, as the point to be the deviation point D, extracts the nodes n nearer to the vehicle position than the foot of the perpendicular extending from the representative point of each facility to the link k that structures the guidance route G from the nodes n located on the guidance route G. At this time, the nodes are extracted from the ones near the foot of the perpendicular in order. As one example in FIG. 6, nodes n1 to n3 indicating the three points in order from near the foot of the perpendicular are extracted. And then, the deviation point determining section 6 computes and obtains distances from the candidate site C to the respective points indicated by the respective nodes n1 to n3 extracted as the point to be the deviation point D. In this example, the road distances from the candidate site C to the points indicated by the respective nodes n1 to n3 are obtained. Note that the respective routes from the candidate site C to the points indicated by the respective nodes n1 to n3 are determined so that the total of the link length becomes the smallest similar to the search method of the guidance route G.

When a road distance is obtained, the deviation point determining section 6 refers to the map database DB, and obtains information on the link length of each link k that structures the routes from the candidate site C to the points indicated by the respective nodes n1 to n3. And then, the total of the link length of the whole route is calculated and obtained as the road distance. In the example of FIG. 6, for example, in the case when the link length of respective links k1 to k5 that structure the route from the candidate site C to the point indicated by the node n1 is Aₖ₁ to A ₖ₅ respectively, the road distance from the candidate site C to the point indicated by the node 1 is obtained by the calculation of Aₖ₁+Aₖ₂+... +A ₖ₅. When the candidate site C is located at an intermediate point of the link k1, the length from the foot of the perpendicular extending from the representative point of the candidate site C to the link k1 to the link k2 is regarded as the link length Aₖ₁ of the link k1, thereby the above-described road distance is calculated.
The road distances from the candidate site C to the points indicated by the nodes n2 and n3 are obtained similarly. The deviation point determining section 6 compares the lengths of a plurality of the obtained road distances. As a result, the point which makes the distance shortest is determined as the deviation point D. In the example of FIG. 6, the point indicated by the node n1 is to be determined as the deviation point D.

### 7. Deviation information obtaining section

The deviation information obtaining section 8 functions as a deviation information obtaining unit obtaining the deviation information DI indicating an extent of deviation from the deviation point D to the candidate site C. Here, "Deviation information DI" indicates the extent of deviation from the guidance route G to the candidate site C based on the deviation point D determined on the guidance route G. The deviation information DI is related to a difficulty of access from the deviation point D to the candidate site C. In this embodiment, candidate site road distance information CD and number of guidance information GN is included in the deviation information DI obtained in the deviation information obtaining section 8.

### (a) Candidate site road distance information

The candidate site road distance information CD is on the road distance from the deviation point D to the candidate site C. When the road distance from the deviation point D to the candidate site C is obtained, the deviation information obtaining section 8 refers to the map database DB, and then obtains information on the link length of each link k that structures the route from the candidate site C to the deviation point D. And then, the total of the link length of the whole route is calculated, and the result thereof is obtained as the candidate site road distance information CD. If the candidate site road distance information CD is included in the deviation information DI in this manner, it makes it possible to obtain information equivalent to the distance that the vehicle actually travels from the deviation point D to the candidate site C, therefore, the deviation information DI to notify the user can be more appropriate.

### (b) Number of guidance information

The number of guidance information GN is on the number of guidance of a course change that the navigation computing section 10 performs for the user while traveling from the deviation point D to the candidate site C. When the number of guidance of a course guidance is obtained, the deviation information obtaining section 8 refers to the map database DB, and then obtains information on the route from the candidate site C to the deviation point D structured with the link k and the node n. And then, in the node n out of one or two or more nodes n passed through while traveling from the deviation point D to the candidate site C along the travel direction, the number of the ones of which the link in the travel direction is to be changed to the link k except the route link is calculated from the deviation point D on the guidance route G as "One". The result is obtained as the number of guidance information GN. In the example of FIG. 6, for example, in all the nodes n after the deviation from the deviation point D, the direction of the link k is changed, and then, the number thereof is to be five as indicated by the circled number. Therefore, "Five" is obtained as the number of guidance information GN. If the number of guidance information GN is included in the deviation information DI in this manner, it is possible to obtain information on the number of right/left-turns that are required in passing through the intersection after the deviation from the guidance route G. Therefore, the deviation information DI that notifies the user can be more appropriate when the user wants to give a priority to ease of access to the candidate site C from the deviation point D.

### 8. Separation information obtaining section

The separation information obtaining section 9 functions as a separation information obtaining unit obtaining separation information EI indicating a linear distance or a road distance from the vehicle position to the candidate site C regarding each candidate site C. In this embodiment, the linear distance from the vehicle position to the candidate site C is obtained as the separation information EI. The linear distance from the vehicle position to the candidate site C is obtained by the calculation based on the coordinates of the representative point of each facility extracted in the candidate site search section 4 and the coordinates of the vehicle position included in the vehicle position information P. The separation information EI obtained in this manner is output to the display input device 11 as the display unit as will be described next.

### 9. Display input device

The display input device 11 is integrated with a display device such as a liquid crystal display device and the like and an input device such as a touch panel and the like. The display input device 11 is connected to the navigation computing section 10 as will be described later, and operates in accordance with the application program AP and functions as an interface to input a destination, a search condition and so on to the navigation computing section 10.

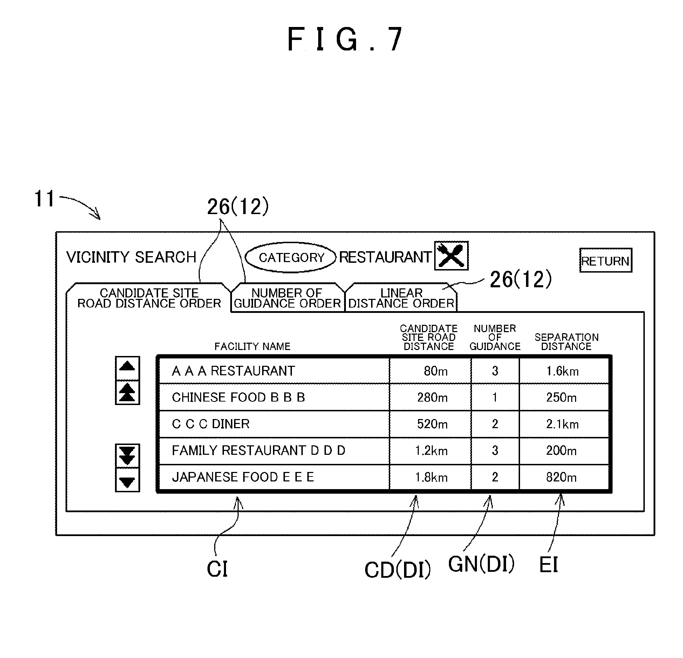

The display input device 11 as the display device displays the candidate site information CI on one or two or more candidate sites C searched in the candidate site search section 4, and functions as the display unit displaying the deviation information DI on each candidate site C related to each candidate site information CI. FIG. 7 shows schematically that "Restaurant" being the search condition set according to the category by the user is included as the attribute information, and the candidate sites C whose linear distances from the guidance route G are within the predetermined distance L are list-displayed on the display input device 11. In the list shown in this drawing, the candidate site information CI, the deviation information DI and the separation information EI regarding the respective candidate sites C is displayed. Concretely, regarding the respective candidate sites C, a facility name as the candidate site information CI, the candidate site road distance information CD and the number of guidance information GN as the deviation information DI, and linear distance information from the vehicle position to the candidate site C as the separation information EI is displayed in relation to each other in order from left, which is based on a facility number (which is not included in the list-display in FIG. 7, see FIG. 4) as identification information included in the facility information F of the candidate site C.

The display input device 11, according to the order selected in a selecting section 12 of the display input device 11 as will be described later, can list-display the candidate site information CI in ascending order of an extent of deviation from the deviation point D to the candidate site C (in the example, in ascending order of a candidate site road distance, or in ascending order of the number of guidance) based on the deviation information DI. Also, it can list-display the candidate site information CI in ascending order of a linear distance from the vehicle position to the candidate site C based on the separation information EI. In the example shown in FIG. 7, the candidate site road distance information CD is selected as information expressing the extent of deviation from the deviation point D to the candidate site C, and the candidate site information CI is list-displayed in ascending order of the distance based on the candidate site road distance information CD.
If the candidate site information CI is list-displayed in ascending order of a candidate site road distance in this manner, it makes the user possible to select a target facility and the like meeting his/her desire easily when priority is given to shorten the distance that the vehicle actually travels from the deviation point D to the candidate site C.
On the other hand, when priority is given to ease of access to the candidate site C from the deviation point D, the candidate site information CI is list-displayed in ascending order of the number of guidance indicated by the number of guidance information GN, thereby, it makes the user possible to select a target facility and the like meeting his/her desire easily.
Further, when priority is given to the distance from the vehicle position, such as the case of arriving at the candidate site C immediately and the like, the candidate site information CI is list-displayed in ascending order of a linear distance from the vehicle position to the candidate site C indicated by the separation information EI, thereby, it makes the user possible to select a target facility and the like meeting his/her desire easily.

Returning to FIG. 1, the display input device 11 as the input device accepts the input by the user when a destination and a search condition for a peripheral facility search, and the like are set. In this embodiment, the display input device 11 displays a search condition input section 13 (not shown in FIG. 7) and the selecting section 12 on the touch panel as necessary.
The search condition input section 13 functions as a search condition input unit inputting a search condition externally. The search condition input to the search condition input section 13 is output to the candidate site search section 4.
Further, the selecting section 12 functions as a selecting unit selecting the order in which the display input device 11 list-displays the candidate site information CI. In this embodiment, the selecting section 12 selects one order in which the display input device 11 list-displays the candidate site information CI from among the order of a candidate site road distance, the order of the number of guidance, and the order of a linear distance from the vehicle position to the candidate site C. In the example of FIG. 7, it is structured such that as the selecting section 12, selecting buttons 26 corresponding to the respective orders are provided respectively, and the order of the list-display can be switched by pressing one of the selecting buttons 26. In this manner, the user can easily select a target facility and the like meeting his/her desire while changing a priority order depending on circumstances occasionally. In terms of making the deviation information DI notifying the user more appropriate, in a default state, it is preferable to be list-displayed in the order of the candidate site road distance corresponding to the distance that the vehicle travels actually from the deviation point D to the candidate site C, as shown in FIG. 7.
Further, besides the display input device 11, the remote control input device 24 as the input device may be provided.

### 10. Navigation computing section

The navigation computing section 10 is a computation processing unit operating in accordance with the application program AP in order to perform the navigation functions such as a vehicle position display, a course guidance from a starting point to a destination, a destination search, and so on. For example, the navigation computing section 10 obtains the map information M in the vicinity of the vehicle position from the map database DB, and displays an image of a map on the display input device 11, and displays a vehicle position mark superimposed over the image of the map based on the vehicle position information P. Further, the navigation computing section 10 performs a course guidance using either the display input device 11 or an audio output device 25, or both of them based on the guidance route G determined in the guidance route search section 3 and the vehicle position information P. When the user selects the candidate site C to stop by, it performs a course guidance based on the route to a destination after traveling through the candidate site C determined in the guidance route search section 3 as well.

### 11. Navigation processing procedures

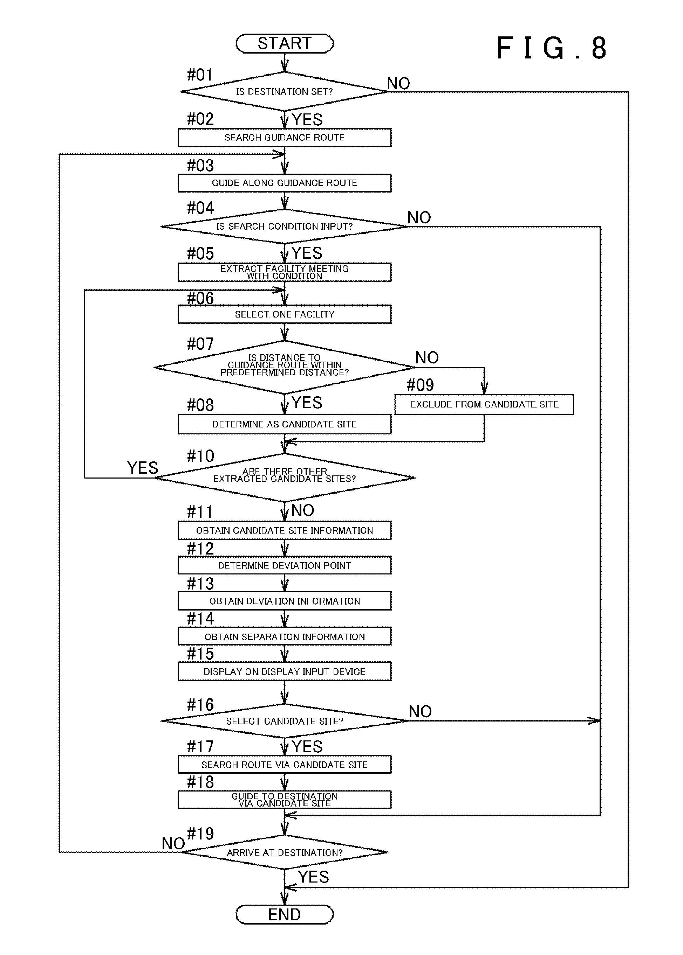

Procedures of a navigation processing including a deviation information display processing performed in the navigation apparatus 1 according to this embodiment are explained. FIG. 8 is a flowchart indicating the procedures of the navigation processing according to this embodiment. These processing procedures as will be explained below are performed by either hardware structuring the functions of the navigation apparatus 1 or software (a program), or both of them. In the case that the functions of the navigation apparatus 1 are configured by a program, the computing processing unit included in the navigation apparatus 1 operates as a computer to perform a navigation program configuring the above described functional parts.

Firstly, the navigation computing section 10 determines whether or not the user sets a destination (step #01). When the user does not set a destination (step #01: No), the processing is finished. Otherwise, when the user sets a destination (step #01: Yes), the guidance route search section 3 refers to information stored in the map database DB, and searches a route to the set destination to determine the guidance route G (step #02). After that, the navigation computing section 10 performs a course guidance based on the guidance route G and the vehicle position information P (step #03).

Next, the navigation computing section 10 determines whether or not the user inputs a search condition for a vicinity search (step #04). When the user does not input a search condition (step #04: No), it proceeds to step #19. Otherwise, when the user inputs a search condition (step #04: Yes), the candidate site search section 4 refers to information stored in the map database DB, and extracts facilities meeting the input condition (step #05). The candidate site search section 4 selects one facility from the facilities extracted at step #05 (step #06), and determines whether or not a linear distance from the one facility to the guidance route G is within the predetermined distance L (step #07). When a linear distance to the guidance route G is within the predetermined distance L (step #07: Yes), the candidate site search section 4 determines the one facility as the candidate site C (step #08). Otherwise, when a linear distance to the guidance route G is the predetermined distance L or more (step #07: No), the candidate site search section 4 excludes the one facility from the candidate site C (step #09). Next, the candidate site search section 4 determines whether or not there are other facilities extracted at step #05 (step #10). When it is determined that there are other facilities (step #10: Yes), it performs step #06 to step #09 again. When it is determined that there are not other facilities (step #10: No), all the candidate sites C are to be determined.

Then, the candidate site information obtaining section 5 obtains the candidate site information CI on each candidate site C determined at step #08 from the map database DB (step #11). Regarding each candidate site C determined at step #08, the deviation point determining section 6 determines the deviation point D from the guidance route G for arriving at the candidate site C (step #12). The content of a deviation point determining processing performed in the deviation point determining section 6 has already been explained, therefore, the explanation thereof is abbreviated. The deviation information obtaining section 8 obtains the candidate site road distance information CD and the number of guidance information GN as the deviation information DI from the deviation point D determined at step #12 (step #13). The content of a deviation information obtaining processing performed in the deviation information obtaining section 8 has already been explained, therefore, the explanation thereof is abbreviated. The separation information obtaining section 9 obtains a linear distance from the vehicle position to the candidate site C as the separation information EI (step #14). Then, the navigation computing section 10 displays the candidate site information CI, the deviation information DI, and the separation information EI on each candidate site C obtained at steps #11, #13, and #14 on the display input device 11 (step #15).

Next, the navigation computing section 10 determines whether or not the one candidate site C is selected from the one or the two or more candidate sites C displayed on the display input device 11 (step #16). When it is determined that the one candidate site C is selected (step #16: Yes), the guidance route search section 3 searches a route to the destination via the candidate site C (step #17), and the navigation computing section 10 guides the user according to the route searched at step #17 (step #18). Next, the navigation computing section 10 determines whether or not to arrive at the destination (step #19). When it is determined that the one candidate site C is not selected at step #16 as well (step #16: No), it proceeds to step #19, and then, the navigation computing section 10 determines whether or not to arrive at the destination. When it is determined not to arrive at the destination at step #19 (step #19: No), it returns to step #03. Otherwise, when it is determined to arrive at the destination (step #19: Yes), the navigation processing is finished.

### [Second embodiment]

A second embodiment of the present invention is explained.

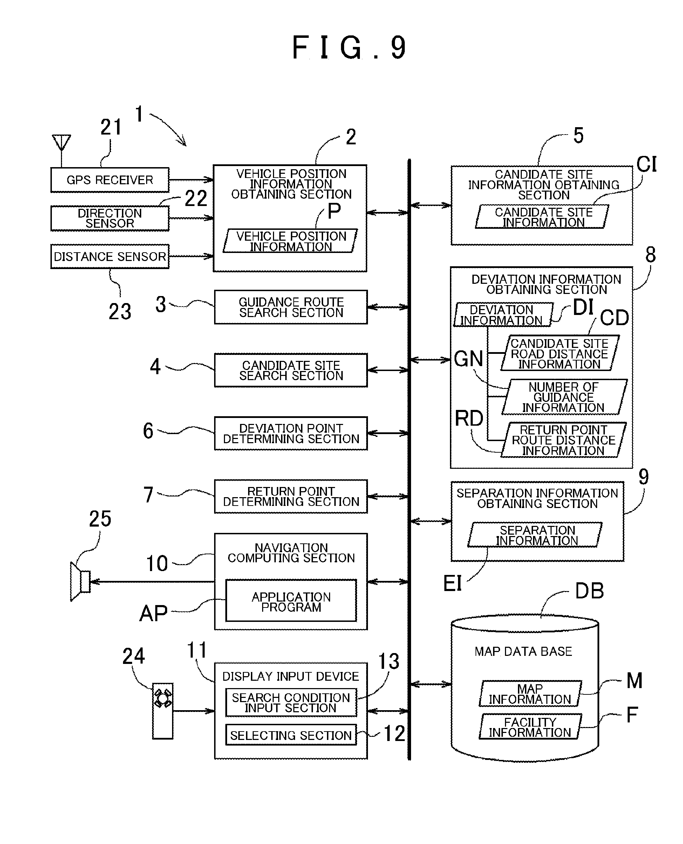

FIG. 9 is a block diagram showing a schematic structure of a navigation apparatus 1 according to this embodiment. Basically, it is approximately similar to the first embodiment, except that the navigation apparatus is provided with a return point determining section 7 and except for a content of deviation information DI obtained in a deviation information obtaining section 8. Accordingly, a content displayed on a display input device 11 is partly different. Hereinafter, regarding the navigation apparatus 1 according to this embodiment, differences from the first embodiment will be mainly explained.

### 12. Return point determining section

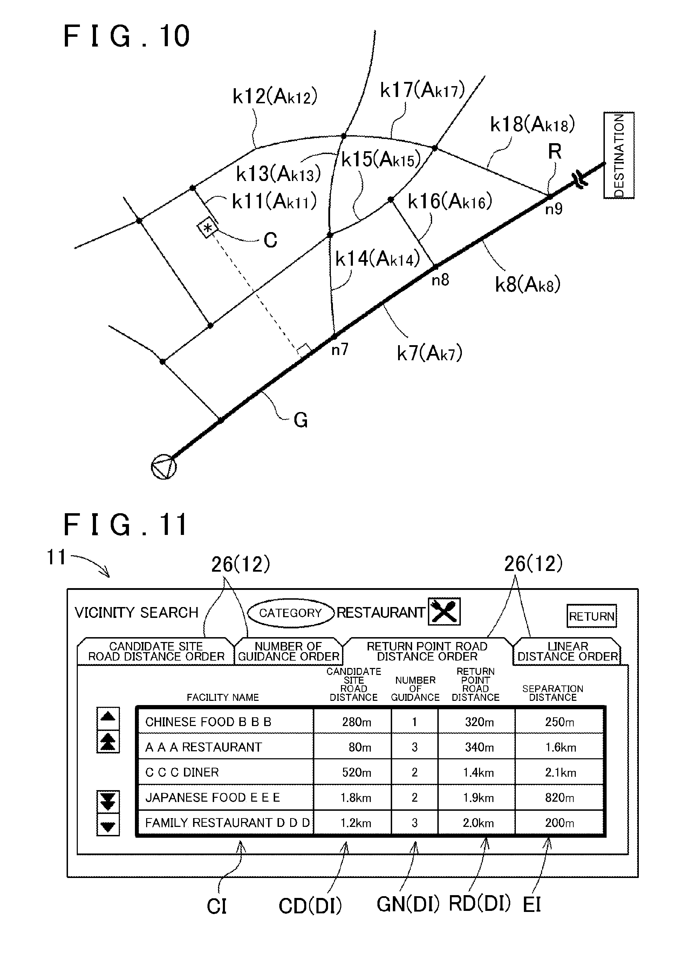

The return point determining section 7 functions as a return point determining unit determining a return point R, which is a point returning to a guidance route G again after traveling through a candidate site C from a deviation point D.
In this embodiment, as the point to be the return point R, the return point determining section 7 extracts nodes n located nearer to a destination than a foot of a perpendicular extending from a representative point of each facility to a link k that structures the guidance route G from the nodes n located on the guidance route G. At this time, the nodes are extracted from the ones near the foot of the perpendicular in order. As one example in FIG. 10, nodes n7 to n9 indicating the three points in order from near the foot of the perpendicular are extracted. The return point determining section 7 computes and obtains distances from the candidate site C to the points indicated by the respective nodes n7 to n9 extracted as the point to be the return point R. In this embodiment, road distances from the candidate site C to the points indicated by the respective nodes n7 to n9 are obtained. Note that respective routes from the candidate site C to the points indicated by the respective nodes n7 to n9 are determined so that a total of a link length becomes the smallest similar to a search method of the guidance route G.

When a road distance is obtained, the return point determining section 7 refers to a map database DB, and obtains information on the link length of each link k that structures the routes from the candidate site C to the points indicated by the respective nodes n7 to n9. And then, the total of the link length of the whole route is calculated and obtained as the road distance. In the example of FIG. 10, for example, in the case when the link length of respective links k11 to k14 that structure the route from the candidate site C to the point indicated by the node n7 is Aₖ₁₁ to A ₖ₁₄ respectively, the road distance from the candidate site C to the point indicated by the node 7 is obtained by the calculation of Aₖ₁₁+Aₖ₁₂+A ₖ₁₃.+A ₖ₁₄. Note that when the candidate site C is located at an intermediate point of the link k11, the length from the foot of the perpendicular extending from the representative point of the candidate site C to the link k11 to the link k12 is regarded as the link length A ₖ₁₁ of the link k11, thereby the above-described road distance is calculated. The road distances from the candidate site C to the points indicated by the nodes n8 and n9 are obtained similarly.

When the return point R after stopping by at the candidate site C is determined, by the way, similar to the case where the deviation point D is determined, the point which makes the road distance to the point to be the return point R shortest can be obtained. In this example, however, in view of having already deviated from the guidance route C, the road distance to the destination is considered to become short. Therefore, when the return point determining section 7 determines the return point R, the lengths of a road distance to the nearest point to the destination of the respective points to be the return point R after passing through the respective points to be the return point R are compared.
In the example of FIG. 10, for example, the road distance from the candidate site C to the node n7 is Aₖ₁₁ + Aₖ₁₂ + Aₖ₁₃+Aₖ₁₄ as above, however, the link lengths Aₖ₇ and Aₖ₈ of the links k7 and k8 are added to it. As the road distance to be compared with in order to determine the return point R, Aₖ₁₁+ Aₖ₁₂ + Aₖ₁₃+Aₖ₁₄ + Aₖ₇+ Aₖ₈ is applied. Similarly, the road distance from the candidate site C to the node n8 is Aₖ₁₁ + Aₖ₁₂ + Aₖ₁₃+Aₖ₁₅ + A ₖ₁₆, however, the link length A ₖ₈ of the link k8 is added to it. As the road distance to be compared with in order to determine the return point R, A ₖ₁₁ + A ₖ₁₂ + A ₖ₁₃ +A ₖ₁₅ + Aₖ₁₆ + A ₖ₈ is applied. As for the node n9, A ₖ₁₁ + A ₖ₁₂ + A ₖ₁₇ +A ₖ₁₈ is applied as the road distance to be compared with, as well. As a result of the comparison, the point which makes the distance shortest is determined as the return point R. In the example of FIG. 10, the point indicated by the node n9 is determined as the return point R.

### 13. Deviation information obtaining section

The deviation information obtaining section 8 functions as a deviation information obtaining unit obtaining the deviation information DI indicating an extent of deviation from the deviation point D to the candidate site C. In this embodiment, the deviation information DI obtained in the deviation information obtaining section 8 includes candidate site road distance information CD, number of guidance information GN, and return point road distance information RD. The candidate site road distance information CD and the number of guidance information GN have already been explained in the first embodiment, thereby, the explanations thereof are abbreviated.

### (c) Return point road distance information

The return point road distance information RD is on a road distance to the return point R returning to the guidance route G again after traveling through the candidate site C from the deviation point D. When the road distance from the deviation point D to the return point R is obtained, the deviation information obtaining section 8 first refers to the map database DB, and then obtains information on the link length of each link k that structures the routes from the deviation point D to the candidate site C, and from the candidate site C to the return point R. Then, the total of the link length of the whole route is calculated, and the result thereof is obtained as the return point road distance information RD. If the deviation information DI includes the return point road distance information RD in this manner, the deviation information DI that notifies the user can be more appropriate in a comprehensive manner taking into consideration not only the vehicle arriving at the candidate site C, but also returning to the guidance route G, or arriving at the destination in stopping by at the candidate site C.

### 14. Display input device

The display input device 11 is integrated with a display device such as a liquid crystal display device and the like and an input device such as a touch panel and the like. The display input device 11 as the display device displays candidate site information CI on one or two or more candidate sites C searched in a candidate site search section 4, and functions as a display unit displaying the deviation information DI on each candidate site C related to the candidate site information CI. FIG. 11 shows schematically that "Restaurant" being a search condition set according to the category by a user is included as attribute information, and the candidate sites C whose linear distances from the guidance route G are within a predetermined distance L are list-displayed on the display input device 11. In the list shown in this drawing, the candidate site information CI, the deviation information DI and separation information EI regarding the respective candidate sites C is displayed. Concretely, regarding the respective candidate sites C, a facility name as the candidate site information CI, the candidate site road distance information CD, the number of guidance information GN, and the return point road distance information RD as the deviation information DI, and linear distance information from a vehicle position to the candidate site C as the separation information EI is displayed in relation to each other in order from left based on a facility number as identification information included in facility information F of the candidate site C.
In this embodiment as well, the display input device 11, according to the order selected in a selecting section 12 of the display input device 11, can list-display the candidate site information CI in ascending order of an extent of deviation from the deviation point D (in the example, in ascending order of a candidate site road distance, in ascending order of the number of guidance, or in ascending order of a return point road distance) based on the deviation information DI. Also, it can list-display the candidate site information CI in ascending order of a linear distance from the vehicle position to the candidate site C based on the separation information EI. In the example shown in FIG. 11, the return point road distance information RD is selected as information expressing the extent of deviation from the deviation point D, and the candidate site information CI is list-displayed in ascending order of the distance based on the return point road distance information RD.

### 15. Deviation information display processing procedures

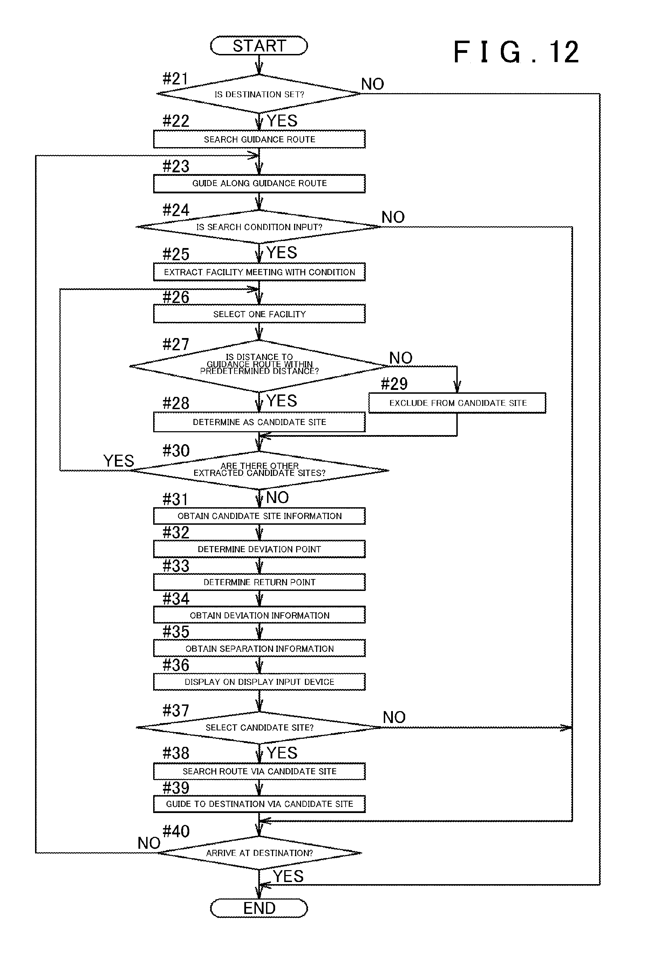

Procedures of a deviation information display processing performed in the navigation apparatus 1 according to this embodiment are explained. FIG. 12 is a flowchart indicating the overall procedures of the deviation information display processing according to this embodiment. These processing procedures as will be explained below are performed by either hardware or software (a program), or both of them that structure functional parts of the navigation apparatus 1. In the case that the functional parts of the navigation apparatus 1 are configured with a program, a computing processing unit included in the navigation apparatus 1 operates as a computer to perform a navigation program configuring the above described functional parts.

Firstly, a navigation computing section 10 determines whether or not the user sets a destination (step #21). When the user does not set a destination (step #21: No), the processing is ended. Meanwhile, when the user sets a destination (step #21: Yes), a guidance route search section 3 refers to information stored in the map database DB, and searches a route to the set destination to determine the guidance route G (step #22). After that, the navigation computing section 10 performs a course guidance based on the guidance route G and vehicle position information P (step #23).

Next, the navigation computing section 10 determines whether or not the user inputs a search condition for a vicinity search (step #24). When the user does not input a search condition (step #24: No), it proceeds to step #40. Meanwhile, when the user inputs a search condition (step #24: Yes), the candidate site search section 4 refers to information stored in the map database DB, and extracts facilities meeting the input condition (step #25). The candidate site search section 4 selects one facility from the facilities extracted at step #25 (step #26), and determines whether or not a linear distance from the one facility to the guidance route G is within the predetermined distance L (step #27). When a linear distance to the guidance route G is within the predetermined distance L (step #27: Yes), the candidate site search section 4 determines the one facility as the candidate site C (step #28). Meanwhile, when a linear distance to the guidance route G is the predetermined distance L or more (step #27: No), the candidate site search section 4 excludes the one facility from the candidate site C (step #29). Next, the candidate site search section 4 determines whether or not there are other facilities extracted at step #25 (step #30). When it is determined that there are other facilities (step #30: Yes), it performs step #26 to step #29 again. When it is determined that there are not other facilities (step #30: No), all the candidate sites C are to be determined.

Then, the candidate site information obtaining section 5 obtains the candidate site information CI on each candidate site C determined at step #28 from the map database DB (step #31). Regarding each candidate site C determined at step #28, a deviation point determining section 6 determines the deviation point D from the guidance route G for arriving at the candidate site C (step #32). The content of a deviation point determining processing performed in the deviation point determining section 6 has already been explained, and therefore, the explanation thereof is abbreviated. Regarding each candidate site C determined at step #28, the return point determining section 7 determines the return point R to the guidance route G after traveling through the candidate site C (step #33). The content of a return point determining processing performed in the return point determining section 7 has already been explained, and therefore, the explanation thereof is abbreviated. The deviation information obtaining section 8 obtains the candidate site road distance information CD, the number of guidance information GN, and the return point road distance information RD as the deviation information DI from the deviation point D determined at step #32 (step #34). The content of a deviation information obtaining processing performed in the deviation information obtaining section 8 has already been explained, and therefore, the explanation thereof is abbreviated. Further a separation information obtaining section 9 obtains a linear distance from the vehicle position to the candidate site C as the separation information EI (step #35). And then, the navigation computing section 10 displays the candidate site information CI, the deviation information DI, and the separation information EI on each candidate site C obtained at steps #31, #34, and #35 on the display input device 11 (step #36).

Next, the navigation computing section 10 determines whether or not the one candidate site C is selected from the one or the two or more candidate sites C displayed on the display input device 11 (step #37). When it is determined that the one candidate site C is selected (step #37: Yes), the guidance route search section 3 searches a route to the destination via the candidate site C (step #38), and the navigation computing section 10 guides the user according to the route searched at step #38 (step #39). Next, the navigation computing section 10 determines whether or not to arrive at the destination (step #40). When it is determined that the one candidate site C is not selected at step #37 as well (step #37: No), it proceeds to step #40, and then, the navigation computing section 10 determines whether or not to arrive at the destination. When it is determined not to arrive at the destination at step #40 (step #40: No), it returns to step #23. Meanwhile, when it is determined to arrive at the destination (step #40: Yes), the navigation processing is ended.

### [Other embodiments]

(1) In the respective embodiments as above, the example, in which the deviation information obtaining section 8 obtains the candidate site road distance information CD, the number of guidance information GN, and the return point road distance information RD as the deviation information DI, has been explained. However, as long as being information based on the deviation point D, it may be, for example, information on a linear distance to the candidate site C, information on an expected time to arrive at the candidate site C, and the like.

(2) In the respective embodiments as above, the example, in which the separation information obtaining section 9 obtains a linear distance from a vehicle position to the candidate site C as the separation information EI, has been explained. However, as has been performed conventionally, a road distance from a vehicle position to the candidate site C may be obtained.

(3) In the respective embodiments as above, the example, in which the deviation point determining section 6 extracts points to be the deviation point D, and determines the point that makes a road distance from each point to the candidate site C shortest as the deviation point D, has been explained. However, the determining method of the deviation point D is not limited to this. For example, an appropriate route from a vehicle position to the candidate site C being a tentative destination is searched, and then, a branch between this and the guidance route G may be determined as the deviation point D.

(4) In the second embodiment as above, the example, in which the return point determining section 7 extracts points to be the return point R, and determines the point as the return point R so that a road distance to the nearest point to a destination of the points to be the return point R after passing through each point from the candidate site C becomes the shortest, has been explained. However, the determining method of the return point R is not limited to this. For example, the point, which makes a road distance from the candidate site C to each point shortest, may be determined as the return point R. Further, an appropriate route to a final destination from the candidate site C being a tentative starting point is searched, and a merging point of this and the guidance route G may be determined as the return point R.

(5) In the first embodiment as above, the example, in which the display input device 11 list-displays the candidate site information CI according to the order selected from among the ascending order of a candidate site road distance, the ascending order of the number of guidance, or the ascending order of a linear distance from a vehicle position to the candidate site C, has been explained. Further in the second embodiment, the example, in which the display input device 11 list-displays the candidate site information CI according to the order selected from among the ascending order of a candidate site road distance, the ascending order of the number of guidance, the ascending order of a return point road distance, or the ascending order of a linear distance from a vehicle position to the candidate site C, has been explained. However, the range of choice of the orders list-displayed on the display input device 11 is not limited to these. Namely, the order to list-display can be selected from a plurality of orders, which are structured by an arbitrary number and an arbitrary combination from the ascending order of a candidate site road distance, the ascending order of the number of guidance, the ascending order of a return point road distance, the ascending order of a linear distance from a vehicle position to the candidate site C, and the ascending order of a road distance from a vehicle position to the candidate site C.

(6) In the respective embodiments as above, the example, of which "Restaurant" is designated when a search condition for a vicinity search is set, has been indicated, and it has been mainly explained with the prospect that the point where a facility is located is regarded as the candidate site C. However, the point where a special facility such as a sightseeing spot is not located can be regarded as the candidate site C. In this case, point information on each point may be included in the facility information F stored in the map database DB, or may be stored separately from the facility information F.

(7) In the respective embodiments as above, the example, in which the navigation apparatus 1 is provided with the candidate site search section 4, and displays the candidate site information CI on the candidate site C searched in the candidate site search section 4 based on the condition input externally, and the deviation information EI related to this, has been explained. However, without performing such a candidate site search in any circumstances, for example, regarding a specific target facility and the like input externally as the candidate site C as it is, the candidate site information CI on only the candidate site C and the deviation information EI related to this may be displayed.

The present invention is appropriately applicable to a navigation apparatus and a navigation program, which refer to map information when a destination is input, and perform a guidance according to a guidance route to the set destination, and also display candidate site information on one or two or more candidate sites capable of stopping by after deviating from the guidance route.
A navigation apparatus referring to map information when a destination is input, performing a guidance according to a guidance route to the set destination, and displaying candidate site information on one or two or more candidate sites capable of stopping by after deviating from the guidance route includes: a deviation point determining unit determining a deviation point of which a route to arrive at the candidate site is a point deviating from the guidance route; a deviation information obtaining unit obtaining deviation information indicating an extent of deviation from the deviation point to the candidate site; and a display unit displaying the deviation information on the candidate site related to the candidate site information.

## Claims

1. A navigation apparatus referring to map information when a destination is input, performing a guidance according to a guidance route to the set destination, and displaying candidate site information on one or two or more candidate sites capable of stopping by after deviating from the guidance route, comprising:
a deviation point determining unit determining a deviation point of which a route to arrive at the candidate site is a point deviating from the guidance route;
a deviation information obtaining unit obtaining deviation information indicating an extent of deviation from the deviation point to the candidate site; and
a display unit displaying the deviation information on the candidate site related to the candidate site information.

2. The navigation apparatus according to claim 1, wherein
the deviation information includes information on a road distance from the deviation point to the candidate site.

3. The navigation apparatus according to claim 1 or 2, wherein
the deviation information includes information on a road distance from the deviation point to a return point returning to the guidance route after traveling through the candidate site.

4. The navigation apparatus according to any one of claims 1 to 3, wherein
the deviation information includes information on the number of guidance while traveling from the deviation point to the candidate site.

5. The navigation apparatus according to any one of claims 1 to 4, further comprising
a separation information obtaining unit obtaining separation information indicating a linear distance or a road distance from a vehicle position to the candidate site regarding the candidate site, wherein
the display unit displays the separation information related to the candidate site information together with the deviation information.

6. The navigation apparatus according to any one of claims 1 to 5, wherein
the display unit list-displays the candidate site information in ascending order of an extent of deviation from the deviation point to the candidate site based on the deviation information.

7. The navigation apparatus according to claim 5, wherein
the display unit list-displays the candidate site information in ascending order of a linear distance or a road distance from the vehicle position to the candidate site based on the separation information.

8. The navigation apparatus according to any one of claims 1 to 5, further comprising,
a selecting unit selecting one from among a plurality of orders selected from the followings as an order in which the display unit list-displays the candidate site information,
(A) an order of a road distance from the deviation point to the candidate site;
(B) an order of a road distance from the deviation point to a return point;
(C) an order of the number of guidance while traveling from the deviation point to the candidate site;
(D) an order of a linear distance from a vehicle position to the candidate site;
(E) an order of a road distance from the vehicle position to the candidate site; and wherein
the display unit list-displays the candidate site information according to the order selected by the selecting unit.

9. A navigation program referring to map information when a destination is input, performing a guidance according to a guidance route to the set destination, displaying candidate site information on a candidate site capable of stopping by after deviating from the guidance route, and causing a computer to execute the steps of:
determining a deviation point of which a route to arrive at the candidate site is a point deviating from the guidance route;
obtaining deviation information indicating an extent of deviation from the deviation point to the candidate site; and
displaying the deviation information on the candidate site related to the candidate site information.
